Europäisches Patentamt

European Patent Office

Office européen des brevets

(11) Veröffentlichungsnummer: **0 601 419 A1**

## EUROPÄISCHE PATENTANMELDUNG

(21) Anmeldenummer: **93119101.9**

(22) Anmeldetag: **26.11.93**

(51) Int. Cl.5: **H02P 5/40**, H02P 6/02

(30) Priorität: **10.12.92 DE 4241503**

(43) Veröffentlichungstag der Anmeldung:
**15.06.94 Patentblatt 94/24**

(84) Benannte Vertragsstaaten:
**BE DE FR GB**

(71) Anmelder: **Bodenseewerk Gerätetechnik GmbH**
**Alte Nussdorfer Strasse 15**
**D-88641 Überlingen(DE)**

(72) Erfinder: **Schulz, Hartmut**
**Jodokstrasse 16**
**D-88662 Überlingen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast**
**Bökenbusch 41**
**Postfach 11 03 86**
**D-42531 Velbert (DE)**

(54) Schaltungsanordnung zur Ansteuerung eines bürstenlosen Gleichstrommotors.

(57) Zur Ansteuerung eines bürstenlosen Gleichstrommotors (10) mit einem radial magnetisierten Rotor (20) mit Hilfe eines Mikroprozessors ist eine Schaltungsanordnung vorgesehen mit einem ersten und einem zweiten Regler (36,38), auf deren Eingänge die Differenzen je eines Stromsollwertes ($i_{dd}$,$i_{qd}$) und eines Stromistwertes ($i_{dm}$,$i_{qm}$) für die in Richtung der Magnetisierung und quer zur Richtung der Magnetisierung fließenden virtuellen Ströme aufgeschaltet sind und welche zugeordnete Regler-Ausgangssignale ($U_d$,$U_q$) bilden. Ein Drehwinkelgeber (44) liefert eine Winkelstellungs-Information über die Winkelstellung des Rotors (20) des Gleichstrommotors (10). Erste Transformationsmittel (46) dienen zur Durchführung einer "inversen PARK-Transformation" zur Umsetzung der Regler-Ausgangssignale ($U_d$,$U_q$) in Dreiphasen- Spannungswerte ($U_R^*$,$U_S^*$,$U_T^*$) für die Erzeugung eines Drehfeldes im Stator (12) des Gleichstrommotors (10), wobei auf die Transformationsmittel (46) außer den Regler-Ausgangssignalen die von dem Drehwinkelgeber (44) erhaltene Winkelstellungs-Information aufgeschaltet ist. Ein Stromrichter (48) bewirkt eine Umsetzung der Dreiphasen-Spannungswerte in Dreiphasen-Ströme, welche auf drei Wicklungen (14,16,18) des Stators (12) des Gleichstrommotors (10) aufgeschaltet sind. Es erfolgt eine Messung wenigstens zweier Ströme ($i_{Sm}$,$i_{Rm}$) in den Wicklungen (14,16). Zweite Transformationsmittel (54) dienen zur Durchführung einer "PARK-Transformation" zu Umsetzung der besagten zwei Ströme in den Wicklungen (14,16) in die besagten Stromsollwerte ($i_{dm}$,$i_{qm}$) für die virtuellen Ströme. Zur Verminderung des technischen Aufwandes bei einer solchen Schaltung weisen die ersten und zweiten Transformationsmittel (46,54) einen Funktionsterm-Speicher (64) auf, in welchem für jede transformierte Größe zwei Blöcke von Funktionstermen der Transformationen unter Adressen abgelegt sind, die jeweils von der Winkelstellungs-Information als erstem Adressenbestandteil und einer der zu transformierenden Größen als zweitem Adressenbestandteil gebildet sind. Über einen Multiplexer (116) ist eine erste der zu transformierenden Größen einmal als zweiter Adressenbestandteil für einen Funktionsterm des ersten Blockes und anschließend als zweiter Adressenbestandteil für einen Funktionsterm des zweiten Blockes auf den Funktionsterm-Speicher (64) aufschaltbar. Ein Register (132) dient zum Zwischenspeichern des der Winkelstellungs-Information und der ersten zu transformierenden Größen zugeordneten Funktionsterms. Weiterhin ist ein Addierer (134) vorgesehen, auf welchen der zwischengespeicherte Funktionsterm aus dem Register (132) und außerdem der Funktionsterm aufschaltbar ist, welcher der Winkelstellungs-Information und der zweiten zu transformierenden Größe zugeordnet ist. Eine weitere Vereinfachung ergibt sich dadurch, daß die Transformationen teils digital und teils analog erfolgen.

Fig. 3

Die Erfindung betrifft eine Schaltungsanordnung zur Ansteuerung eines bürstenlosen Gleichstrommotors mit einem radial magnetisierten Rotor mit Hilfe eines Mikroprozessors, enthaltend:

(a) einen ersten und einen zweiten Regler, auf deren Eingänge die Differenzen je eines Stromsollwertes und eines Stromistwertes für die in Richtung der Magnetisierung und quer zur Richtung der Magnetisierung fließenden virtuellen Ströme aufgeschaltet sind und welche zugeordnete Regler-Ausgangssignale bilden,

(b) ein Drehwinkelgeber, der eine Winkelstellungs-Information über die Winkelstellung des Rotors des Gleichstrommotors liefert,

(c) erste Transformationsmittel zur Durchführung einer "inversen PARK-Transformation" zur Umsetzung der Regler-Ausgangssignale in Dreiphasen- Spannungswerte für die Erzeugung eines Drehfeldes im Stator des Gleichstrommotors, wobei auf die Transformationsmittel außer den virtuellen Spannungswerten die von dem Drehwinkelgeber erhaltene Winkelstellungs-Information aufgeschaltet ist,

(d) Mittel zur Messung wenigstens zweier Ströme in den Wicklungen und

(e) zweite Transformationsmittel zur Durchführung einer "PARK-Transformation" zu Umsetzung der besagten zwei Ströme in den Wicklungen in die besagten Stromsollwerte für die virtuellen Ströme.

Eine solche Schaltungsanordnung ist bekannt durch einen Aufsatz von B. Robyns, "Commande numerique des moteurs synchrone at asynchrone".

Der Motor weist bei dieser Anordnung einen radial magnetisierten Rotor auf. Der Stator enthält drei um 120° gegeneinander winkelversetzte Statorwicklungen in Sternschaltung. Der Motor weist ferner einen Winkelgeber auf, der in digitaler Form die Winkelstellung des Rotors angibt. Aus einer Gleichspannung werden in den drei Statorwicklungen Ströme erzeugt, die ein umlaufendes Drehfeld erzeugen und einen entsprechenden Umlauf des Rotors hervorrufen. Dabei ist die Drehzahl dieses Drehfeldes und damit des Motors in Abhängigkeit von Führungsgrößen veränderbar.

Die Schaltungsanordnung enthält zwei Regler, an deren Eingängen die Differenzen je einer Führungsgröße ind eines Istwertes gebildet werden. Führungsgrößen und Istwerte entsprechen virtuellen Strömen, durch welche ein mit dem Rotor des Motors umlaufendes Magnetfeld erzeugt wird in einem rotorfesten System, wobei einer der Ströme eine Magnetfeldkomponente in Richtung der Magnetisierung des Rotors und der andere der Ströme eine Magnetfeldkomponente senkrecht zur Richtung der Magnetisierung erzeugt. In der Praxis ist die erstere Führungsgröße konstant null. Die Reglerausgangssignale liegen an einer Entkopplungsschaltung. Die Entkopplungsschaltung liefert zwei entsprechende Spannungswerte. Diese beiden Spannungswerte werden einer "inversen PARK-Transformation" unterworfen. Diese inverse PARK-Transformation transformiert die beiden Spannungskomponenten in die drei Spannungen, welche an die drei Wicklungen des Stators des Motors anzulegen sind. Die inverse PARK-Transformation hat in Matrixschreibweise folgende Form:

$$
\begin{vmatrix} X_a \\ X_b \\ X_c \end{vmatrix} = \sqrt{\frac{2}{3}} \begin{vmatrix} \cos\theta & -\sin\theta \\ \cos(\theta-2\pi/3) & -\sin(\theta-2\pi/3) \\ \cos(\theta-4\pi/3) & -\sin(\theta-4\pi/3) \end{vmatrix} \begin{vmatrix} X_d \\ X_q \end{vmatrix}
$$

Auf die entsprechenden Transformationsmittel sind die Winkelstellungs-Informationen von dem am Motor sitzenden Winkelgeber aufgeschaltet. Die so erhaltenen drei Spannungen sind auf einen gesteuerten Stromrichter geschaltet, der entsprechende Ströme in den drei Wicklungen des Stators erzeugt. Von den drei Strömen werden zwei Ströme gemessen. Bei der Sternschaltung ist der dritte Strom durch diese beiden Ströme bestimmt und braucht daher nicht zusätzlich gemessen zu werden. Diese Ströme werden einer PARK-Transformation unterworfen. Die PARK-Transformation transformiert die das umlaufende Magnetfeld erzeugenden Ströme in gleichwirkende Ströme, wie sie in einem mit dem Rotor umlaufenden Spulensystem von zwei zueinander senkrechten Spulen zur Erzeugung des gleichen umlaufenden Magnetfeldes fließen müßten. Dabei erzeugt wieder eine dieser virtuellen Spulen eine Magnetfeld-Komponente in Richtung der Magnetisierung des Rotors und die andere virtuelle Spule erzeugt ein Magnetfeld senkrecht zu dieser Richtung. Die Transformationsmittel für diese PARK-Transformation erhalten ebenfalls die Winkelstellungs-Informationen von dem am Motor sitzenden Winkelgeber. Die PARK-Transformation hat in Matrixschreibweise folgende Form

$$\begin{vmatrix} U_d \\ U_q \end{vmatrix} = \begin{vmatrix} R_a + L_d s & -L_q \omega \\ L_d \omega & R_a + L_q s \end{vmatrix} \begin{vmatrix} i_d \\ i_q \end{vmatrix} + \begin{vmatrix} 0 \\ K_T \omega \end{vmatrix}$$

$$T_{EM} = K_T i_q + (L_d - L_q) i_d i_q$$

wobei

$R_a$ den Widerstand in den induzierten Phasen,

$L_d$ die Induktion in der Achse 'd", d.h. parallel zur Magnetisierung des Rotors,

$L_q$ die Induktion in der Achse "q", d.h. quer zu der Magnetisierung des Rotors,

$\omega$ die Drehgeschwindigkeit des Rotors,

$\theta$ die Winkelstellung des Rotors,

$K_T$ den Koeffizienten der EMK und

s den Laplace-Operator bezeichnet.

Die PARK-Transformation liefert somit die Stromistwerte für die beiden vorerwähnten Regler.

Die Durchführung der beiden Transformationen erfolgt üblicherweise mittels eines Speichers, in denen die transformierten Größen abgelegt sind, wobei die beiden Eingangsgrößen und die Position des Rotors gemeinsam jeweils die zugehörigen Adressen bilden. Das erfordert eine sehr hohe Speicherkapazität. Eine solche hohe Speicherkapazität ist für viele Anwendungen zu aufwendig und nicht tragbar.

Der Erfindung liegt die Aufgabe zugrunde, den technischen Aufwand für eine Schaltungsanordnung der eingangs genannten Art zu verringern.

Der Erfindung liegt insbesondere die Aufgabe zugrunde, die hierbei auftretenden Transformationen mit geringerem Aufwand durchzuführen.

Speziell sollen die Transformationen mit einem Speicher geringerer Speicherkapazität durchgeführt werden.

Erfindungsgemäß wird diese Aufgabe dadurch gelöst, daß

(g) die ersten und zweiten Transformationsmittel einen Funktionsterm-Speicher aufweisen, in welchem für jede transformierte Größe zwei Blöcke von Funktionstermen der Transformationen unter Adressen abgelegt sind, die jeweils von der Winkelstellungs-Information als erstem Adressenbestandteil und einer der zu transformierenden Größen als zweitem Adressenbestandteil gebildet sind,

(h) über einen Multiplexer eine erste der zu transformierenden Größen einmal als zweiter Adressenbestandteil für einen Funktionsterm des ersten Blockes und anschließend als zweiter Adressenbestandteil für einen Funktionsterm des zweiten Blockes auf den Funktionsterm-Speicher aufschaltbar ist,

(i) ein Register vorgesehen ist zum Zwischenspeichern des der Winkelstellungs-Information und der ersten zu transformierenden Größen zugeordneten Funktionsterms und

(j) weiterhin ein Addierer vorgesehen ist, auf welchen der zwischengespeicherte Funktionsterm aus dem Register und außerdem der Funktionsterm aufschaltbar ist, welcher der Winkelstellungs-Information und der zweiten zu transformierenden Größe zugeordnet ist.

Auf diese Weise läßt sich die erforderliche Speicherkapazität stark reduzieren. Es werden nur die Werte der einzelnen Funktionsterme gespeichert und nicht die verschiedenen möglichen Kombinationen dieser Terme. Adressen werden von der Winkelstellungs-Information und jeweils nur einer der zu transformierenden Eingangsgrößen gebildet. Der Adressenraum wird dadurch wesentlich kleiner. Die Funktionsterme werden dann zur Bildung der transformierten Größen durch einen Addierer addiert.

Eine weitere Vereinfachung kann dadurch erreicht werden, daß die ersten Transformationsmittel

(a) einen Digital-Analog-Wandler enthalten, auf welchen die von dem Addierer gelieferten Termsummen aufschaltbar sind,

(b) die von dem Digital-Analog-Wandler erhaltenen analogen Ausgangssignale in zwei Analogwertspeichern gespeichert sind und

(c) eine analoge Additionsschaltung zur Linearkombination der in den Analogwertspeichern gespeicherten, die raumfesten orthogonalen Komponenten eines zweiphasigen Drehfeldes repräsentierenden, analogen Ausgangssignale vorgesehen ist, welche dreiphasige Ansteuersignale für die drei Wicklungen des Stators des Motors liefert.

Es wird dadurch ein Teil der Transformation analog durchgeführt.

In entsprechender Weise können die zweiten Transformationsmittel

(a) eine analoge Additionsschaltung zur Linearkombination der in den Wicklungen gemessenen Ströme zur Erzeugung zweier, raumfeste orthogonale Komponenten eines zweiphasigen Drehfeldes repräsentierender Ströme aufweisen sowie

(b) einen analogen Multiplexer und

(c) einen Analog-Digital-Wandler, auf welchem die letzteren Ströme über den Multiplexer nacheinander aufschaltbar sind und welcher entsprechende digitale Stromwerte als zweiten Adressenbestandteil auf den Funktionsterm-Speicher aufschaltet.

Dann wird auf der Eingangsseite ein Teil der Transformation analog durchgeführt.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

Fig.1    ist ein Blockschaltbild und zeigt das -an sich bekannte-Grundprinzip der Regelung eines bürstenlosen Gleichstrommotors.

Fig.2    zeigt den radial magnetisierten Rotor und veranschaulicht die Bedeutung der Führungsgrößen bei der Schaltungsanordnung von Fig.1.

Fig.3    zeigt als Blockschaltbild die Transformationsmittel zur Durchführung der inversen PARK-Transformation und der PARK-Transformation.

Fig.4    zeigt Einzelheiten der digitalen Signalverarbeitung bei den Transformationsmitteln von Fig.2.

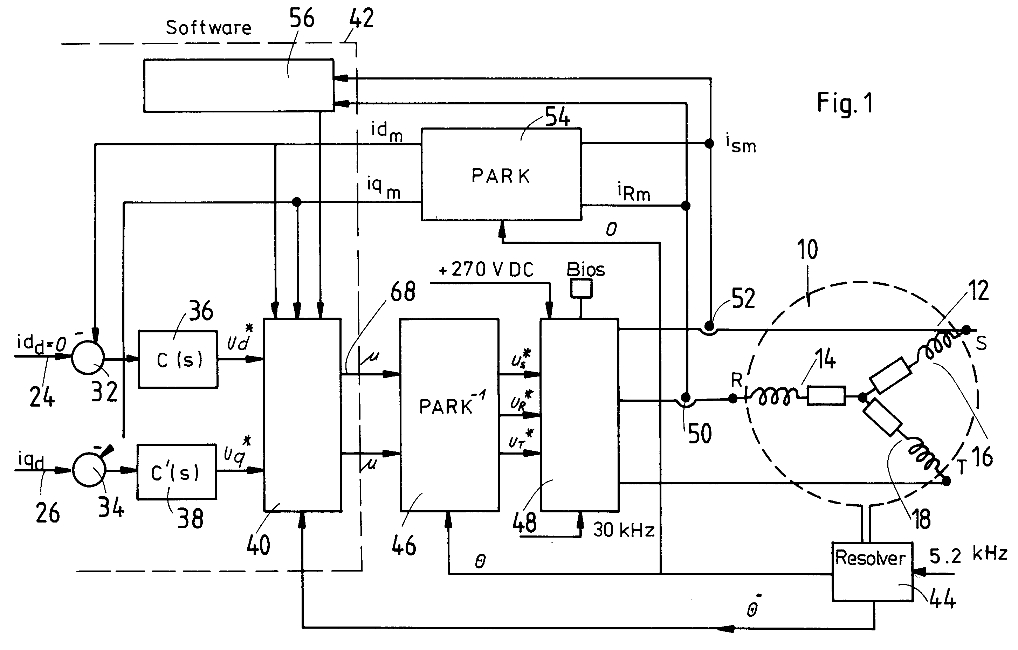

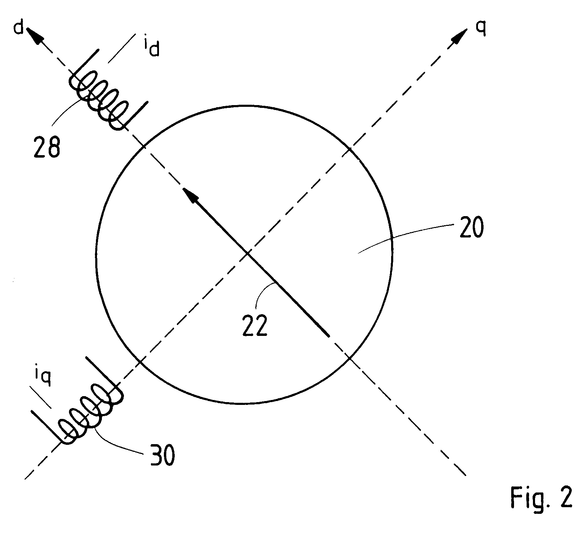

In Fig.1 ist mit 10 ein zu regelnder, bürstenloser Gleichstrommotor bezeichnet. Der Gleichstrommotor 10 weist einen Stator 12 mit drei um 120° gegeneinander winkelversetzten Wicklungen 14, 16 und 18 auf. Jede der Wicklungen 14, 16 und 18 ist in Fig.1 durch eine Induktivität und einen ohmschen Widerstand dargestellt. Der Gleichstrommotor 10 weist weiterhin einen Rotor 20 (Fig.2) auf. Der Rotor 20 ist radial magnetisiert, was in Fig.2 durch einen Pfeil 22 dargestellt ist.

An Eingängen 24 und 26 liegen Führungsgrößen $i_{dd}$ und $i_{qd}$. Die Führungsgrößen repräsentieren die Sollwerte von Strömen in zwei virtuellen Spulen 28 und 30 (Fig.2), die mit dem Rotor 20 umlaufen und Komponenten eines ebenfalls umlaufenden Magnetfeldes erzeugen. Diesem umlaufenden Magnetfeld soll dasjenige Magnetfeld entsprechen, das von den Strömen in den Wicklungen 14, 16 und 18 des Stators 12 erzeugt wird. In der Praxis ist der Stromsollwert $i_{dd}$ = 0. Die Führungsgrößen 24 und 26 sind auf Summierpunkte 32 bzw. 34 aufgeschaltet. An den Summierpunkten 32 und 34 liegen außerdem die indirekt gemessenen Stromistwerte $i_{dm}$ bzw. $i_{qm}$ der Ströme in den virtuellen Spulen 28 bzw. 30. Die in den Summierpunkten gebildeten Differenzen liegen an Reglern 36 bzw. 38. Die Regler 36 und 38 liefern Reglerausgangsgrößen $U_d{}^*$ bzw. $U_d{}^*$. Diese Reglerausgangsgrößen sind auf eine Entkopplungsschaltung 40 geschaltet, welche eine Entkopplung der d- und q-Achsen vornimmt. Die Entkopplungsschaltung 40 liefert entkoppelte Reglerausgangsgrößen $U_d$ und $U_q$. Die bisher beschriebene Signalverarbeitung erfolgt durch geeignete Software in einem Mikroprozessor. Das ist durch die gestrichelte Umrandung 42 in Fig.1 dargestellt.

Mit dem Rotor 20 des Motors 10 ist ein Winkelgeber 44 verbunden. Der Winkelgeber 44 liefert die Winkelstellungs-Information des Rotors sowie die Drehgeschwindigkeit . Die Drehgeschwindigkeit ist auf die Entkopplungsschaltung 40 aufgeschaltet.

Die Regler-Ausgangssignale $U_d$ und $U_q$ sind auf erste Transformationsmittel 46 geschaltet. Diese ersten Transformationsmittel 46 erhalten auch die Winkelstellungs-Information . Die ersten Transformationsmittel 46 führen eine inverse PARK-Transformation durch, wie sie oben angegeben ist. Die ersten Transformationsmittel 46 liefern drei Ausgangsspannungen $U_R{}^*$ , $U_S{}^*$ und $U_T{}^*$ . Diese drei Ausgangsspannungen sind auf gesteuerte Stromrichtermittel 48 geschaltet. Die Stromrichtermittel 48 liefern drei entsprechende Ströme $i_{Rm}$, $i_{Sm}$ und $i_{Tm}$ in den drei Wicklungen 14, 16 und 18 des Stators 12.

Die beiden Ströme $i_{Rm}$ und $i_{Sm}$ werden durch Strommesser 50 bzw. 52 gemessen. Die gemessenen Ströme sind auf zweite Transformationsmittel 54 geschaltet und werden einer PARK-Transformation der oben angegebenen Art unterworfen. Die zweiten Transformationsmittel 54 liefern die virtuellen Stromistwerte $i_{dm}$ und $i_{qm}$, die auf die Summierpunkte 32 bzw. 34 am Eingang der Regler 36 bzw. 38 aufgeschaltet sind.

Die Strommeßwerte $i_{Rm}$ und $i_{Sm}$ sind außerdem auf eine Schutzschaltung 56 zum Schutz der Leistungsverstärker aufgeschaltet. Die Schutzschaltung 56 steuert die Entkopplungsschaltung 40. Außerdem ist die Entkopplungsschaltung 40 von den Stromistwerten $i_{dm}$ und $i_{qm}$ beaufschlagt. Das alles geschieht in Form von Software in dem Mikroprozessor.

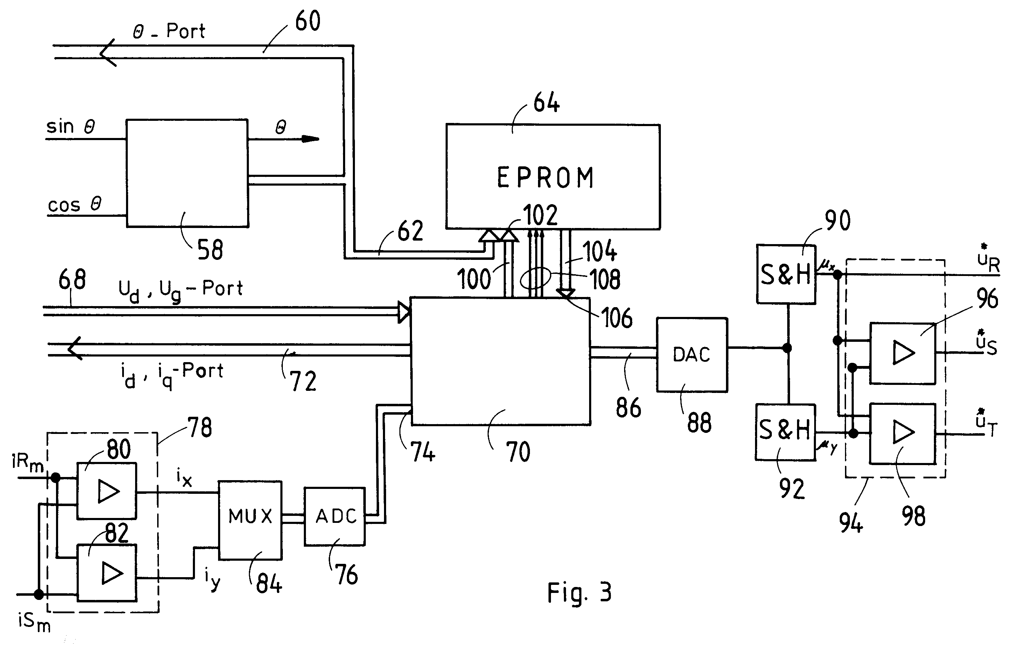

Fig.3 zeigt den Aufbau der ersten und der zweiten Transformationsmittel für die Durchführung der inversen PARK-Transformation bzw. der PARK-Transformation.

Der Winkelgeber 44 ist ein Resolver. Der Resolver liefert analog Ausgangssignale, die dem Sinus und dem Kosinus der Winkelstellung proportional sind. In einem Wandler 58 wird aus den analogen Signalen eine digitale Winkelstellungs-Information gebildet. Die digitale Winkelstellungs-Information wird über eine Datenleitung 60 auf einen Winkelstellungs-Port des Mikroprozessors gegeben. Über eine Datenleitung 62 wird die Winkelstellungs-Information als Adressenbestandteil auf einen Funktionsterm-Speicher (EPROM) 64 aufgeschaltet. Der Wandler liefert auch die Drehgeschwindigkeit

Die Regler-Ausgangssignale $U_d$ und $U_q$ von der Entkopplungsschaltung 40 liegen an einem Ausgangssignal-Port 68 des Mikroprozessors. Diese Regler-Ausgangssignale sind auf eine als Baustein ausgeführte Digitalschaltung 70 aufgeschaltet. Die Digitalschaltung 70 liefert $i_{dm}$- und $i_{dq}$-Werte an einem Stromistwert-Port 72 des Mikroprozessors.

Eine Datenleitung 74 verbindet einen Analog-Digital-Wandler 76 mit der Digitalschaltung 70. Die gemessenen Ströme $i_{Rm}$ und $i_{Sm}$ von den Strommessern 50 und 52 liegen an einer analogen Additionsschaltung 78 mit zwei Operationsverstärkern 80 und 82 an, durch welche eine Linearkombination der gemessenen Ströme gebildet wird. Die Linearkombination ist so gewählt, daß zwei Phasen von Ausgangsströmen $i_x$ und $i_y$ erhalten werden, die in zwei zueinander senkrechten, feststehenden, virtuellen Spulen ein Magnetfeld erzeugen, das mit dem durch die drei Wicklungen 14, 16 und 18 des Stators 12 erzeugten Magnetfeld übereinstimmt. Die so erhaltenen Ausgangsströme sind über einen Multiplexer 84 auf den Analog-Digital-Wandler 76 aufschaltbar. Es erfolgt so analog eine Wandlung von drei Phasen auf zwei Phasen. Wie erwähnt, ergibt sich bei der Sternschaltung der Wicklungen 14, 16 und 18 jeweils der dritte Strom aus den beiden anderen, so daß der dritte Strom nicht gemessen zu werden braucht. Tatsächlich repräsentieren aber die Eingänge der Additionsschaltung drei Phasen.

Die Digitalschaltung 70 liefert digitale Daten an einem Daten-Port 86. Der Daten-Port ist mit einem Digital-Analog-Wandler 88 verbunden. Die Ausgangssignale des Digital-Analog-Wandlers sind alternierend auf Analogwert-Speicher 90 und 92 (Sample-Hold-Schaltungen) aufschaltbar. Die auf die Analogwertspeicher aufgeschalteten analogen Signale $U_x$ und $U_y$ entsprechen - ähnlich wie die Ströme $i_x$ und $i_y$-Spannungen, die auf zueinander senkrecht angeordnete, feststehende, virtuelle Spulen aufgeschaltet das gleiche Magnetfeld erzeugen würden wie die Spannungen $U_R^*$ usw. in den Wicklungen 14, 16 und 18 des Stators 12. Diese Spannungen sind auf eine Additionsschaltung 94 mit zwei Operationsverstärkern 96 und 98 aufgeschaltet, die an drei Ausgängen die Spannungen $U_R^*$, $U_S^*$ und $U_T^*$ liefern, welche den Stromrichter ansteuern.

Die Digitalschaltung 70 ist außerdem über eine Datenleitung 100 mit einem Eingang 102 des Funktionsterm-Speichers 64 verbunden. Der Funktionsterm-Speicher 64 ist über eine Datenleitung 104 mit einem Eingang 106 der Digitalschaltung 70 verbunden. Schließlich steht die Digitalschaltung 70 mit dem Funktionsterm-Speicher 64 noch über Steuerleitungen 108 in Verbindung.

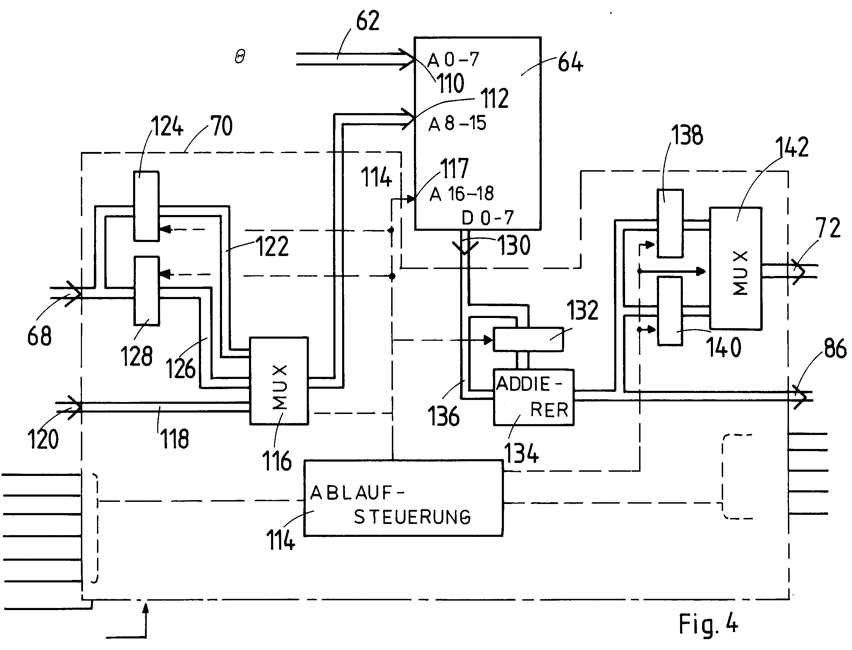

Fig.4 zeigt den Aufbau der Digitalschaltung 70, die in Fig.4 gestrichelt umrandet ist, und den Funktionsterm-Speicher 64.

Der Funktionsterm-Speicher 64 hat einen 8-Bit-Adresseneingang 110, der mit der Datenleitung 62 verbunden ist. Die Datenleitung 64 überträgt als einen Adressenbestandteil die Winkelstellungs-Information von dem Wandler 58. Ein weiterer 8-Bit-Adresseneingang 112 erhält einen zweiten Adressenbestandteil über eine Datenleitung 114 von einem Multiplexer 116. Schließlich liefert die Ablaufsteuerung über Steuerleitungennoch Adressenbestandteile an einem Adresseneingang 117. Der Multiplexer 116 erhält über Datenleitung 118 Daten von einem Port 120, der über die Datenleitung 74 mit dem Analog-Digital-Wandler 76 verbunden ist. Der Multiplexer 116 ist weiterhin über eine Datenleitung 122 mit einem ersten Register 124 und über eine Datenleitung 126 mit einem zweiten Register 128 verbunden. In den Registern 124 und 128 werden von dem Mikroprozessor über den Ausgangssignal-Port 68 die Werte von $U_d$ und $U_q$ abgelegt.

Der Funktionsterm-Speicher 64 liefert an einem Port 130 Funktionsterme, die zu den jeweiligen Adressen gespeichert sind. Es wird jeweils ein Funktionsterm in einem Register 132 zwischengespeichert und mittels eines Addierers 134 zu dem nächsten Funktionsterm addiert, der über eine Datenleitung 136 unmittelbar auf den Addierer 134 aufgeschaltet ist. Der Addierer 134 gibt die Additionsergebnisse nacheinander in Register 138 und 140 ein oder gibt sie auf den Daten-Port 86. Die in den Registern 138 und 140 gespeicherten Datenworte werden über einen Multiplexer 142 nacheinander auf den Stromistwert-Port 72 aufgeschaltet.

Der Ablauf wird von einer Ablaufsteuerung 144 gesteuert.

Die beschriebene Schaltungsanordnung arbeitet wie folgt:

Zur Durchführung der "inversen PARK-Transformation" erhält die Digitalschaltung 70 von dem Ausgangssignal-Port 68 des Mikroprozessors seriell die Regler-Ausgangssignale $U_d$ und $U_q$. Diese Regler-Ausgangssignale $U_d$ und $U_q$ werden in die Register 124 und 128 eingeschrieben. Der Multiplexer 116 schaltet nun nacheinander erst das Regler-Ausgangssignal $U_d$ und dann das Regler-Ausgangssignal $U_q$ auf den Adresseneingang 112 des Funktionsterm-Speichers 64 auf. In dem Funktionsterm-Speicher wird dadurch eine Adresse angesprochen, die aus der Winkelstellungs-Information und dem Regler-Ausgangsssignal $U_d$ oder dem Regler-Ausgangssignal $U_q$ zusammengesetzt ist. Jeder solchen Adresse ist ein Funktionsterm zugeordnet, der sich aus der inversen PARK-Transformation ergibt. Der Funktionsterm, der mit dem Adressenbestandteil $U_d$ ausgelesen wird, wird in dem Register 132 zwischengespeichert und liegt an einem Eingang

6

des Addierers 134. Der Funktionsterm, der mit dem Adressenbestandteil $U_q$ ausgelesen wird, wird dann auf den zweiten Eingang des Addierers gegeben. Der Addierer bildet die Summe. Diese Summe entspricht der oben erwähnten Größe $U_x$. In entsprechender Weise wird durch andere gespeicherte Funktionsterme mit den Adressenbestandteilen $U_d$ und $U_q$ und anderen Adressenbestandteilen an dem mit der Ablaufsteuerung 144 verbundenen Adresseneingang 117 die Größe $U_y$ gebildet. Die so gebildeten digitalen Größen sind auf den Daten-Port 86 aufgeschaltet. In der oben beschriebenen Weise werden daraus analog die drei Spannungen $U_R{}^*$, $U_S{}^*$ und $U_T{}^*$ gebildet.

Die "ersten Transformationsmittel" für die inverse PARK-Transformation bestimmen somit mittels des Funktionsterm-Speichers 64 zunächst digital einzelne Funktionsterme. Diese werden addiert. Daraus werden aus den (auf das System des umlaufenden Rotors 20 bezogenen) Regler-Ausgangssignalen $U_d$ und $U_q$ zunächst Größen $U_x$ und $U_y$ gebildet, die auf ein feststehendes System bezogenen, orthogonalen Magnetfeld-Komponenten entsprechen. Diese Größen werden in analoge Signale umgesetzt. Die Transformation in drei Phasen erfolgt dann analog durch die Additionsschaltung 94. Hierdurch läßt sich die inverse PARK-Transformation mit geringstmöglichem technischen Aufwand realisieren. Es wird vergleichsweise wenig Speicherkapazität von dem Funktionsterm-Speicher 64 verlangt. Die "Zwei Phasen zu drei Phasen"-Transformation, die im wesentlichen eine Linearkombination von Größen erfordert, erfolgt mit geringem Aufwand analog.

In ähnlicher Weise wird die PARK-Transformation in der Rückführschleife durchgeführt:

Die aus den gemessenen Strömen $i_{Rm}$ und $i_{Sm}$ analog gebildeten und digitalisierten Größen $i_x$ und $i_y$ liegen an dem Port 120 und werden durch den Multiplexer 116 in einer anderen, durch die Ablaufsteuerung 144 vorgegebenen Phase des Zyklus auf den Adresseneingang 112 des Funktionsterm-Speichers 64 aufgeschaltet. Auch hier wird wieder mit jeder der Größen $i_x$ und $i_y$ als Adressenbestandteil ein gespeicherter Funktionsterm ausgelesen, der sich aus der PARK-Transformation ergibt. Die Funktionsterme werden durch den Addierer 134 addiert. Daraus ergibt sich einmal $i_{dm}$ und zum anderen mit anderen Funktionstermen bei einem anderen Adressenbestandteil von der Ablaufsteuerung 144 $i_{qm}$. Die beiden so gebildeten Größen $i_{dm}$ und $i_{qm}$ werden in den Registern 138 und 140 zwischengespeichert und durch den Multiplexer 142 an dem Stromistwert-Port 72 ausgegeben und dem Mikroprozessor zugeführt.

Auch hier ist die PARK-Transformation aufgeteilt in eine "Drei Phasen zu zwei Phasen"-Transformation, welche durch die Additionsschaltung 78 analog durchgeführt wird, und eine digitale Transformation mittels des Funktionsterm-Speichers 64. Auch hier ist die digitale Transformation aufgespalten in die Bestimmung von einzelnen Funktionstermen mit den verschiedenen digitalisierten Größen $i_x$ und $i_y$ als Adressenbestandteilen und anschließende Addition. Auch dadurch wird, wie bei der Durchführung der inversen PARK-Transformation, der technische Aufwand und insbesondere die erforderliche Speicherkapazität verringert.

## Patentansprüche

1. Schaltungsanordnung zur Ansteuerung eines bürstenlosen Gleichstrommotors (10) mit einem radial magnetisierten Rotor (20) mit Hilfe eines Mikroprozessors, enthaltend:

   (a) einen ersten und einen zweiten Regler (36,38), auf deren Eingänge die Differenzen je eines Stromsollwertes ($i_{dd}$,$i_{qd}$) und eines Stromistwertes ($i_{dm}$,$i_{qm}$) für die in Richtung der Magnetisierung und quer zur Richtung der Magnetisierung fließenden virtuellen Ströme aufgeschaltet sind und welche zugeordnete Regler-Ausgangssignale ($U_d$,$U_q$) bilden,

   (b) einen Drehwinkelgeber (44), der eine Winkelstellungs-Information über die Winkelstellung des Rotors (20) des Gleichstrommotors (10) liefert,

   (c) erste Transformationsmittel (46) zur Durchführung einer "inversen PARK-Transformation" zur Umsetzung der Regler-Ausgangssignale ($U_d$,$U_q$) in Dreiphasen- Spannungswerte ($U_R{}^*$,$U_S{}^*$,$U_T{}^*$) für die Erzeugung eines Drehfeldes im Stator (12) des Gleichstrommotors (10), wobei auf die Transformationsmittel (46) außer den Regler-Ausgangssignalen die von dem Drehwinkelgeber (44) erhaltene Winkelstellungs-Information aufgeschaltet ist,

   (d) Mittel (50,52) zur Messung wenigstens zweier Ströme ($i_{Sm}$,$i_{Rm}$) in den Wicklungen (14,16) und

   (e) zweite Transformationsmittel (54) zur Durchführung einer "PARK-Transformation" zu Umsetzung der besagten zwei Ströme in den Wicklungen (14,16) in die besagten Stromsollwerte ($i_{dm}$,$i_{qm}$) für die virtuellen Ströme,

   **dadurch gekennzeichnet, daß**

   (f) die ersten und zweiten Transformationsmittel (46,54) einen Funktionsterm-Speicher (64) aufweisen, in welchem für jede transformierte Größe zwei Blöcke von Funktionstermen der Transformationen unter Adressen abgelegt sind, die jeweils von der Winkelstellungs-Information als erstem Adressenbestandteil und einer der zu transformierenden Größen als zweitem Adressenbestandteil gebildet sind,

(g) über einen Multiplexer (116) eine erste der zu transformierenden Größen einmal als zweiter Adressenbestandteil für einen Funktionsterm des ersten Blockes und anschließend als zweiter Adressenbestandteil für einen Funktionsterm des zweiten Blockes auf den Funktionsterm-Speicher (64) aufschaltbar ist,

(h) ein Register (132) vorgesehen ist zum Zwischenspeichern des der Winkelstellungs-Information und der ersten zu transformierenden Größen zugeordneten Funktionsterms und

(i) weiterhin ein Addierer (134) vorgesehen ist, auf welchen der zwischengespeicherte Funktionsterm aus dem Register (132) und außerdem der Funktionsterm aufschaltbar ist, welcher der Winkelstellungs-Information und der zweiten zu transformierenden Größe zugeordnet ist.

2. Schaltungsanordnung nach Anspruch 1, **dadurch gekennzeichnet, daß** die ersten Transformationsmittel (46)

(a) ein erstes und ein zweites Register (124,128) aufweisen, in welchen die Regler-Ausgangssignale $(U_d, U_q)$ zwischenspeicherbar sind, und

(b) die zwischengespeicherten, Regler-Ausgangssignale über den Multiplexer (116) nacheinander als Adressenbestandteil auf den Funktionsterm-Speicher (64) aufschaltbar sind.

3. Schaltungsanordnung nach Anspruch 2, **dadurch gekennzeichnet, daß** die Regler (36,38) von einem Mikroprozessor gebildet sind.

4. Schaltungsanordnung nacheinem der Ansprüche 1 bis 3, **dadurch gekennzeichnet, daß** die ersten Transformationsmittel (46)

(a) einen Digital-Analog-Wandler (88) enthalten, auf welchen die von dem Addierer (134) gelieferten Termsummen aufschaltbar sind,

(b) die von dem Digital-Analog-Wandler (88) erhaltenen analogen Ausgangssignale $(U_x, U_y)$ in zwei Analogwertspeichern (90,92) gespeichert sind und

(c) eine analoge Additionsschaltung (94) zur Linearkombination der in den Analogwertspeichern (90,92) gespeicherten, die raumfesten orthogonalen Komponenten eines zweiphasigen Drehfeldes repräsentierenden, analogen Ausgangssignale vorgesehen ist, welche dreiphasige Ansteuersignale $(U_R^*, U_S^*, U_T^*)$ für die drei Wicklungen (14,16,18) des Stators (12) des Motors (10) liefert.

5. Schaltungsanordnung nach einem der Ansprüche 1 bis 4, **dadurch gekennzeihnet, daß** die zweiten Transformationsmittel (54)

(a) eine analoge Additionsschaltung (78) zur Linearkombination der in den Wicklungen gemessenen Ströme $(i_{Rm}, i_{Sm})$ zur Erzeugung zweier, raumfeste orthogonale Komponenten eines zweiphasigen Drehfeldes repräsentierender Ströme $(i_x, i_y)$ aufweisen sowie

(b) einen analogen Multiplexer (84) und

(c) einen Analog-Digital-Wandler (76), auf welchem die letzteren Ströme über den Multiplexer (84) nacheinander aufschaltbar sind und welcher entsprechende digitale Stromwerte als zweiten Adressenbestandteil auf den Funktionsterm-Speicher (64) aufschaltet.

Fig.1

Fig. 2

Fig. 3

EP 0 601 419 A1

Fig. 4

EP 0 601 419 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | DE-A-33 38 658 (ZIMMERMANN) 2. Mai 1985 <br> * Zusammenfassung * <br> * Seite 5 - Seite 7; Abbildungen 2,3 * <br> * Seite 9; Abbildung 7 * <br> --- | 1,5 | H02P5/40 <br> H02P6/02 |
| A | MODELLING AND CONTROL OF ELECTRICAL MACHINES: NEW TRENDS . PROCEEDINGS OF THE THIRD INTERNATIONAL SYMPOSIUM 1991 , AMSTERDAM, NH, NIEDERLANDE <br> Seiten 203 - 207 <br> B.ROBYNS ET AL. 'DIGITAL FIELD ORIENTED CONTROL OF A PM SYNCHRONOUS ACTUATOR USING A SIMPLIFIED STRATEGY FOR CONTROLLING THE PARK COMPONENTS OF THE STATOR CURRENTS' <br> * Seite 203 - Seite 204; Abbildung 3 * <br> --- | 1 | |
| A | EP-A-0 119 583 (KABUSHIKI KAISHA TOSHIBA) 26. September 1984 <br> * Seite 3, Zeile 28 - Seite 5, Zeile 6 * <br> --- | 1 | |
| A | ELECTRONIQUE <br> Nr. 9 , Juni 1991 , PARIS FR <br> Seiten 44 - 46 <br> JEAN-PIERRE FESTE 'Le multiplexage s'intègre aux convertisseurs A/N' <br> * Seite 46, rechte Spalte; Abbildung 4 * <br> ----- | | RECHERCHIERTE SACHGEBIETE (Int.Cl.5) <br><br> H02P |

Der vorliegende Recherchenbericht wurde für alle Patentansprüche erstellt

| Recherchenort | Abschlußdatum der Recherche | Prüfer |
|---|---|---|
| DEN HAAG | 15. Februar 1994 | Bourbon, R |